# EUROPEAN PATENT SPECIFICATION

(11) **EP 2 098 717 B1**
(45) Date of publication and mention of the grant of the patent: **07.08.2013**
(21) Application number: 09154268.8
(22) Date of filing: 04.03.2009
(51) Int. Cl.: H01H 35/34, F02M 37/22

(54) **Clogging sensor**
Verstopfungssensor
Capteur de colmatage

(30) Priority: 07.03.2008 JP 2008057505
(43) Date of publication of application: 09.09.2009
(73) Proprietor: KYOSAN DENKI CO., LTD., Koga City, Ibaraki-Pref., 306-0206, (JP)
(72) Inventor: Agui, Toshiaki, Koga City, Ibaraki-Pref., 306-0206, (JP)
(74) Representative: Winter, Brandl, Fürniss, Hübner, Röss, Kaiser, Polte - Partnerschaft

(56) References cited:
- EP-A2- 1 795 734
- DE-A1- 2 750 419
- DE-A1- 10 315 052
- JP-A- 2001 189 120
- US-A- 3 209 721
- US-A- 3 535 480
- US-A- 4 844 793
- US-A- 5 153 396

## Description

### BACKGROUND OF THE INVENTION

### 1. Field of the Invention

The invention relates to a clogging sensor that detects clogging of, for example, a diesel fuel filter.

### 2. Description of the Related Art

A diesel engine has been used as an engine of, for example, a vehicle. In the diesel engine, light oil is used as fuel. The light oil is compressed by an injection pump so that the pressure of the light oil becomes high, and the light oil is injected from an injector into a combustion chamber of the engine. Thus, self-combustion occurs in the combustion chamber.

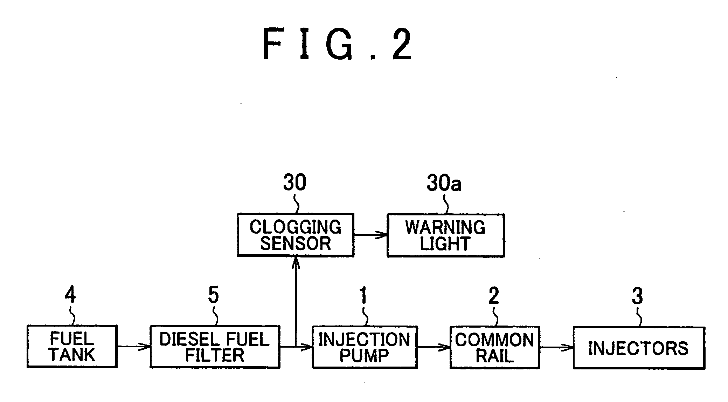

FIG. 2 shows an example of a fuel system for the diesel engine. The fuel system mainly includes a fuel tank 4, a diesel fuel filter 5, an injection pump 1, a common rail 2, and injectors 3. The injection pump 1 is a pump that supplies high-pressure fuel. The fuel in the fuel tank 4 is introduced into the injection pump 1 through the diesel fuel filter 5. The injection pump 1 delivers the fuel to the injectors 3 through the common rail 2 that distributes the fuel.

Foreign substances, for example, refuse, solid foreign substances such as rust, carbon, sludge such as gummy substances, and moisture are mixed into the fuel. For example, the injectors 3 may be worn, or stuck due to the foreign substances. Therefore, the foreign substances need to be removed. Thus, the diesel fuel filter 5 is provided to remove the foreign substances.

The removed foreign substances are deposited on the surface of an element, which is a member that removes the foreign substances, as time elapses, depending on the usage state of the diesel fuel filter. Finally, the element may be clogged. If the element is clogged, the fuel is not delivered. If a driver drives a vehicle without knowing that the element is clogged and the fuel is not delivered, the engine may be suddenly stopped.

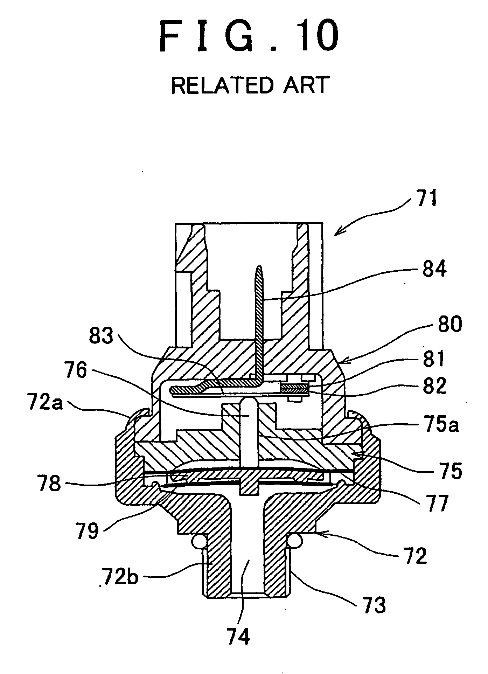

A technology, in which a clogging sensor for the element is fitted to the diesel fuel filter, and clogging of the element is detected using the clogging sensor, is available to avoid the above-described situation. FIG. 10 shows the clogging sensor in the technology.

The clogging sensor 71 includes a body member 72, an intermediate member 75, and a case member 80. The body member 72 is positioned in a lower portion of the clogging sensor 71. A thin crimp portion 72a is formed in an upper portion of the body member 72. A female thread 73 is provided around an outer periphery of a small-diameter portion 72b with a small diameter positioned in a lower portion of the body member 72. The female thread 73 is fitted to, for example, the diesel fuel filter. A negative-pressure introduction passage 74 is formed inside the body member 72. A negative pressure, which is generated when the element is clogged, is guided through the negative-pressure introduction passage 74.

The intermediate member 75 is held between the body member 72 and the case member 80. An opening 75a is formed in a center portion of the intermediate member 75. An operation bar 76 with a bar shape is inserted through the opening 75a in a manner such that the operation bar 76 moves upward and downward. A diaphragm 77, a stopper 78 that supports the diaphragm 77, and a bendable plate 79 are disposed between the intermediate member 75 and the body member 72 in the manner shown in FIG. 10.

The bendable plate 79 has a spring property. When a negative pressure applied to a lower portion of the diaphragm 77 is equal to or larger than a predetermined value, the bendable plate 79 is pressed through the stopper 78, and bent downward. The bendable plate 79 allows the diaphragm 77 to quickly move upward and downward. A lower end of the operation bar 76 contacts an upper surface of the diaphragm 77. The operation bar 76 moves upward and downward in accordance with the upward and downward movement of the diaphragm 77.

The case member 80 is positioned in an upper portion of the clogging sensor 71. A switch assembly is housed in the case member 80. The switch assembly includes a fixed contact point 81, a movable, contact point 82, and a switch lever 83 with a spring property. The fixed contact point 81 is fixed at the case member 80. The movable contact point is fixed at one end of the switch lever 83. The other end of the switch lever 83 is connected to an end portion of a terminal 84.

When the operation bar 76 moves downward, and the switch lever 83 is placed in a free state, the switch lever 83 is supported at only one end by the end portion of the terminal 84, and the movable contact point 82 fixed at the other end of the switch lever 83 is separated from the fixed contact point 81. When the operation bar 76 moves upward, the switch lever 83 is pressed upward, and the movable contact point 82 contacts the fixed contact point 81. After the members, such as the body member 72, the intermediate member 75, and the case member 80, are assembled, the crimp portion 72a of the body member 72 is crimped toward a lower end portion of the case member 80. Thus, the members are integrated with each other (refer to, for example, Japanese Patent Application Publication No. 2001-189120 (JP-A-2001-189120)).

In the clogging sensor 71 shown in FIG. 10, the members, such as the switch assembly, are placed at positions shown in FIG. 10 at normal times when the element is not clogged. That is, the diaphragm 77 and the operation bar 76 move upward, the operation bar 76 presses the switch lever 83 to move the switch lever 83 upward against a spring force, and the movable contact point 82 contacts the fixed contact point 81.

When the element is clogged, and a negative pressure is applied to the lower surface of the diaphragm 77, the bendable plate 79 is bent downward, and the operation bar 76 moves downward together with the diaphragm 77. As a result, the switch lever 83 is supported at only one end, and thus, the switch lever 83 greatly swings around a supporting point due to an inertia force caused by, for example, the spring force of the switch lever 83 and the weight of the movable contact point 82. Thus, in some cases, the switch lever 83 may be deformed, or the movable contact point 82 may strongly hit the fixed contact point 81 due to the vibration of the switch lever 83, and accordingly, for example, the contact points may be broken.

Also, in the clogging sensor 71 shown in FIG. 10, when the negative pressure decreases, and the operation bar 76 returns to a normal position, or when a hand pump is used, for example, to remove air in the fuel passage, the operation bar 76 is rapidly pressed upward, and the switch lever 83 is pressed upward by an excessively strong force. As a result, the switch lever 83 may be deformed, or the movable contact point 82 may strongly hit the fixed contact point 81, and accordingly, for example, the contact points may be broken.

EP 1 795 734 A2 discloses a clogging sensor according to the preamble of claim 1.

### SUMMARY OF THE INVENTION

The invention provides a clogging sensor in which a switch lever, a movable contact point, and a fixed contact point are prevented from being deformed or broken when an operation bar rapidly releases a pressing force applied to the switch lever, or the operation bar rapidly applies the pressing force to the switch lever.

An aspect of the invention relates to a clogging sensor that includes a case member in which a switch assembly is housed, an intermediate member in which an operation bar moves, a diaphragm that moves in association with the operation bar, and a body member into which a negative pressure is introduced. The switch assembly includes a fixed contact point, a movable contact point, and a switch lever with a spring property. A movable contact point is provided at one end of the switch lever, and a support portion, which is supported by the case member, is formed at the other end of the switch lever. When a negative pressure equal to or larger than a first predetermined value is applied to the diaphragm, the movable contact point moves away from the fixed contact point, the switch lever contacts a stopper, and the switch lever is supported at at least two points by the stopper and the support portion.

With the configuration, when clogging occurs, for example, the operation bar moves downward, and thus, rapidly moves away from the switch lever. However, the switch lever contacts the stopper, and the switch lever is supported at at least two points by the stopper and the support portion. When a plurality of the stoppers are provided, the switch lever is supported at three or more points. Thus, it is possible to reduce the possibility that the switch lever greatly vibrates, and the switch lever is deformed due to the vibration, or the movable contact point strongly hits the fixed contact point, and the contact points are worn or broken.

In the above-described aspect, the stopper may be the intermediate member.

With the configuration, because the stopper is the intermediate member, it is not necessary to provide a stopper member. This suppresses an increase in the production cost.

In the above-described aspect, the stopper may be at least one protruding portion provided on an upper surface of the intermediate member.

With the configuration, because the stopper is at least one protruding portion provided on the upper surface of the intermediate member, the height, shape, and position of each protruding portion, and the number of the protruding portions may be freely determined. The protruding portion may be formed integrally with the intermediate member, or separately from the intermediate member. Thus, it is possible to effectively and more reliably reduce, for example, the deformation of the switch lever.

In the above-described aspect, the at least one protruding portion may be provided at a position farther from the support portion than from the movable contact point.

With the configuration, because the protruding portion is provided at a position farther from the support portion than from the movable contact point, it is possible to reduce the inertia force of the free end of the switch lever, and to further reduce, for example, the deformation of the switch lever.

In the above-described aspect, the switch lever may be supported at the at least two points by the stopper and the support portion, in a manner such that a spring force of the switch lever is applied to the stopper.

In the above-described aspect, the switch lever may be supported in a manner such that a position of the movable contact point is higher than a position of the support portion.

With the configuration, the switch lever is supported at the at least two points by the stopper and the support portion, in a manner such that the switch lever is tilted, and the spring force of the switch lever is applied to the stopper. Thus, it is possible to reduce the possibility that the switch lever greatly vibrates.

In the above-described aspect, an arc-shaped protrusion, which protrudes downward, may be provided in the switch lever, and the operation bar may press the arc-shaped protrusion.

In the above-described aspect, the operation bar may include a guard portion; and when the movable contact point contacts the fixed contact point, the guard portion may contact the intermediate member so that a contact pressure between the movable contact point and the fixed contact point is equal to or lower than a second predetermined pressure.

With the configuration, when the movable contact point contacts the fixed contact point, the guard portion of the operation bar contacts the intermediate member. Therefore, for example, when the operation bar moves upward and strongly presses the switch lever, it is possible to reduce the possibility that the operation bar excessively presses the switch lever due to the inertia force of the operation bar, and the movable contact point strongly hits the fixed contact point. As a result, it is possible to reduce the possibility that the switch lever is deformed, or the movable contact point and the fixed contact point are worn or broken.

In the above-described aspect, the intermediate member may include a recessed portion; and the guard portion may be inserted into, and may contact the recessed portion.

With the configuration, because the guard portion is inserted into, and contacts the recessed portion of the intermediate member, the operation bar is substantially housed in the intermediate member. Thus, although the guard portion is provided, the height of the clogging sensor does not need to be increased. As a result, the size of the clogging sensor is reduced.

In the above-described configuration, a projection may be provided in one of the guard portion and the intermediate member at a contact portion at which the guard portion contacts the intermediate member.

With the configuration, because the projection is provided in one of the guard portion and the intermediate member at the contact portion at which the guard portion contacts the intermediate member, the following effect is obtained. When clogging occurs, for example, the operation bar moves downward, and thus, the pressing force applied to the switch lever is released. If the operation bar is in surface contact with the intermediate member, a great force is required to separate the operation bar from the intermediate member. However, with the configuration, it is possible to reduce the force required to separate the operation bar from the intermediate member. As a result, it is possible to more reliably separate the operation bar from the intermediate member.

In the above-described aspect, when the movable contact point contacts the fixed contact point, the projection provided in the one of the guard portion and the intermediate member may make line contact with the other of the guard portion and the intermediate member.

In the above-described aspect, the clogging sensor may be used for a diesel fuel filter.

With the configuration, because the clogging sensor is used for a diesel fuel filter, it is possible to appropriately detect clogging of the diesel fuel filter.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:

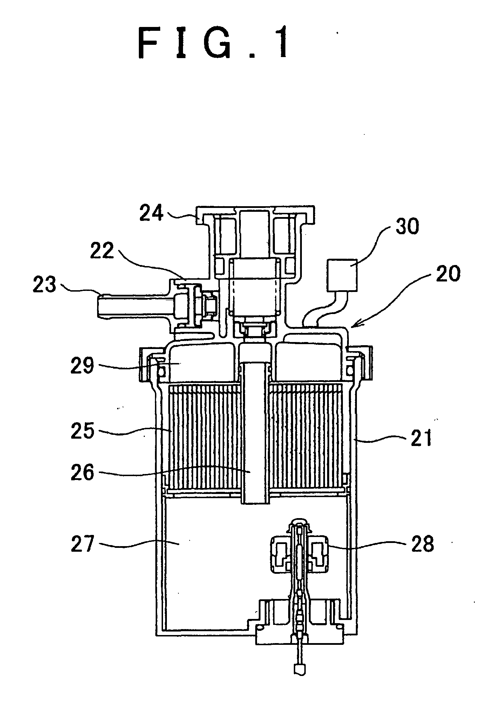

FIG. 1 is a sectional view showing a diesel fuel filter to which a clogging sensor according to an embodiment of the invention is fitted;
FIG. 2 is a schematic diagram showing a position at which the clogging sensor according to the embodiment of the invention is disposed in a diesel fuel system;
FIG. 3 is a sectional view showing the clogging sensor according to the embodiment of the invention at normal times;
FIG. 4 is a sectional view showing the clogging sensor according to the embodiment of the invention when clogging occurs;
FIG. 5 is a plan view showing an intermediate member of the clogging sensor according to the embodiment;
FIG. 6 is a sectional view taken along the line VI-VI in FIG. 5;
FIG. 7 is a sectional view showing another intermediate member of the clogging sensor according to the embodiment;
FIG. 8 is a sectional view showing a diaphragm of the clogging sensor according to the embodiment;
FIG. 9A is a bottom view showing a switch lever of the clogging sensor according to the embodiment, and FIG. 9B is a sectional view of the switch lever; and
FIG. 10 is a sectional view showing a clogging sensor in related art.

### DETAILED DESCRIPTION OF EMBODIMENTS

A diesel fuel filter 20 includes a framework member that includes a case 21 and a cap 22. The case 21 has a bottomed cylindrical shape, and forms an outer wall. The cap 22 is removably attached to an open end at an upper portion of the case 21. The cap 22 is made of resin. A fuel supply pipe 23 and a fuel discharge pipe (not shown) are provided in an upper portion of the cap 22. Also, a hand pump 24 is fitted to the upper portion of the cap 22. For example, after the element 25 is replaced, or when water is drained from the diesel fuel filter 20, the hand pump 24 is used.

The case 21 is a bottomed hollow cylindrical member made of resin. A top portion of the case 21 is open. An element 25 is housed in the case 21. A fuel passage 26 is formed in a center of the case 21. A flow sensor 28 is provided, and a pool chamber 27 that includes a drain cock (not shown) is formed below the element 25. Further, an upper space 29 is formed above the element 25.

The diesel fuel filter 20 is equivalent to a diesel fuel filter 5 in FIG. 2. The diesel fuel filter 5 has the above-described schematic structure. Fuel that contains dust and the like is introduced through the fuel supply pipe 23. Then, the fuel is introduced into the pool chamber 27 through the fuel passage 26, and water and the like contained in the fuel are separated from the fuel. After the water and the like are separated from the fuel, the fuel flows in a reverse direction. When the fuel passes through the element 25, dust and the like contained in the fuel are separated from the fuel. After dust and the like are separated from the fuel, the fuel is discharged from the upper space 29 positioned above the element 25 through the fuel discharge pipe (not shown). Then, the fuel is delivered to an injection pump 1.

A clogging sensor 30 according to an embodiment of the invention is provided on an upper surface of the cap 22. Dust and the like may be deposited in the element 25 of the diesel fuel filter 20 as time elapses, and as a result, the element 25 may be clogged. If the element 25 is clogged, a strong negative pressure is generated in the upper space 29 downstream of the element 25. The clogging sensor 30 is provided on the upper surface of the cap 22 to detect the negative pressure. When the clogging sensor 30 detects clogging of the element 25, for example, a warming light 30a (FIG. 2) is turned on to notify a driver of the clogging.

The clogging sensor 30 may be provided directly on the upper surface of the cap 22, or may be connected to the upper surface of the cap 22 through a connection member such as a flexible tube.

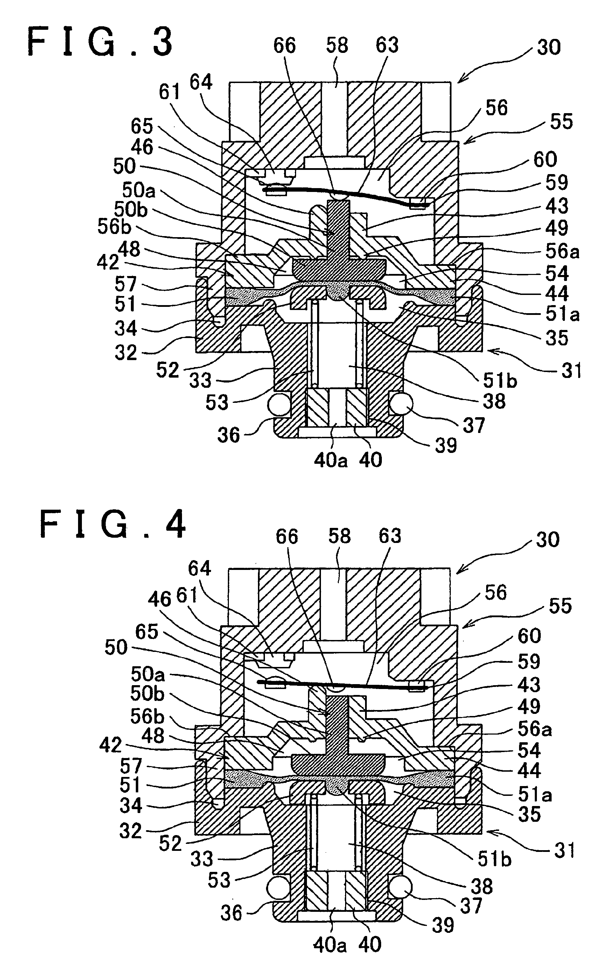

The clogging sensor 30, which functions as the clogging detection means, will be described with reference to, for example, FIG. 3. The clogging sensor 30 includes a body member 31, an intermediate member 42, and a case member 55. The body member 31 made of resin is positioned in a lower portion of the clogging sensor 30. The body member 31 includes a large-diameter portion 32 with a large diameter, and a small-diameter portion 33 with a small diameter. A fitting groove 34 with a circular shape is formed on an outer peripheral portion of the large-diameter portion 32. A negative-pressure chamber 35 is formed in a center portion of the large-diameter portion 32. A circular groove 36 is formed on an outer periphery of the small-diameter portion 33, and an O-ring 37 is fitted into the circular groove 36. For example, an end of a flexible tube (not shown) is connected to the diesel fuel filter 20, and the other end of the flexible tube is fitted to the small-diameter portion 33. A negative-pressure introduction passage 38 with a circular cross section is formed in a center of the small-diameter portion 33. A thread 39 is cut at a position close to an inlet of the negative-pressure introduction passage 38. A spring supporter 40 is fitted to the thread 39. A port 40a is formed at a center of the spring supporter 40.

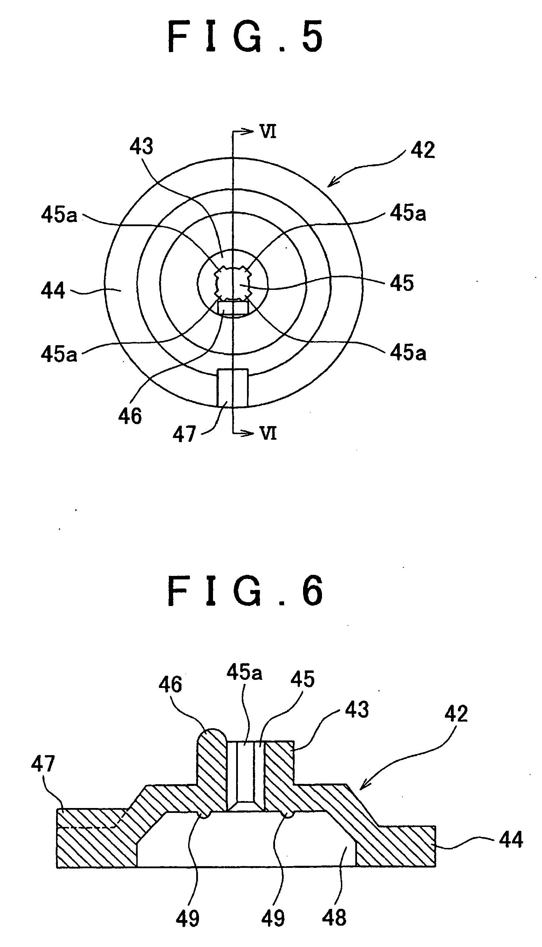

The intermediate member 42, which is made of resin, is positioned in a center of the clogging sensor 30. The intermediate member 42 includes a cylindrical portion 43 with a small diameter, and a disc portion 44 with a large diameter. The cylindrical portion 43 is positioned in an upper portion of the intermediate member 42, and the disc portion 44 is positioned in a lower portion of the intermediate member 42. An opening 45 is formed in a center of the cylindrical portion 43. The opening 45 extends through the cylindrical portion 43 from an upper portion to a lower portion of the cylindrical portion 43. An operation bar 50 (described later) is inserted into the opening 45. As shown in FIG. 5, four rectangular grooves 45a, which radially extend, are formed in the opening 45. When the operation bar 50 is inserted in the opening 45, an upper space is connected to a lower space through the four rectangular grooves 45a.

A protruding portion 46 is provided on an upper end surface of the cylindrical portion 43. The protruding portion 46 has a rectangular shape in a planar view, and has an arc shape in a sectional view. The protruding portion 46 is provided at a position farther from a support portion 59 (described later) than from a movable contact point 65. That is, the protruding portion 46 is provided at a position closer to the movable contact point 65 than to the support portion 59. The protruding portion 46 functions as the stopper according to the invention. When clogging occurs, the operation bar 50 moves downward, and accordingly, the switch lever 63 is supported at only one end, the switch lever 63 contacts the protruding portion 46. Thus, the switch lever 63 is supported at two points. The protruding portion 46 may be formed integrally with the intermediate member 42, or may be formed separately from the intermediate member 42. For example, the protruding portion 46 may have an arc shape along a circumferential end of the cylindrical portion 43 in the planar view. Also, an upper end portion of the protruding portion 46 may be flat in the sectional view. For example, the protruding portion 46 may have a rectangular shape in the sectional view. Also, the height of the cylindrical portion 43 may be increased without providing the protruding portion 46. In this case, the upper end portion of the cylindrical portion 43 functions in the same manner as the manner in which the protruding portion 46 functions.

The outer diameter of the disc portion 44 is smaller than the outer diameter of the large-diameter portion 32 of the body member 31. As shown in FIG. 5, a positioning member 47 is provided in an outer end portion of an upper surface of the disc portion 44. The positioning member 47 has a rectangular shape in a planar view. The positioning member 47 positions the protruding portion 46 so that the protruding portion 46 is farther from the support portion 59 than from the movable contact point 65. The positioning member 47 is fitted into a rectangular groove 56b formed in the case member 55 at a position closer to the movable contact point 65 than to the support portion 59.

A recessed portion 48 is formed in a center of a bottom portion of the disc portion 44. A guard portion 50b of the operation bar 50 is inserted in the recessed portion 48. Because the guard portion 50b is inserted in the recessed portion 48, the height of the operation bar 50 is reduced to a value that is substantially the same as the height of the intermediate member 42. Therefore, the height of the entire clogging sensor is reduced. A ring-shaped projection 49 is provided around the opening 45 in the recessed portion 48. The ring-shaped projection 49 projects downward. The ring-shaped projection 49 makes line contact with an upper surface of the guard portion 50b. The ring-shaped projection 49 prevents the operation bar 50 from excessively moving upward. Also, the ring-shaped projection 49 makes it easier to separate the guard portion 50b from the intermediate member 42 when the operation bar 50 moves downward.

The operation bar 50, a diaphragm 51, a spring receiver 52, and a spring 53 are provided between the body member 31 and the intermediate member 42. The operation bar 50 is made of resin, and has an inverse T-shape in a sectional view. The operation bar 50 includes a bar portion 50a and the guard portion 50b. The bar portion 50a is inserted through the opening 45 of the intermediate member 42 in a manner such that there is a small gap between an inner periphery of the opening 45 and an outer periphery of the bar portion 50a. When the bar portion 50a is inserted through the opening 45, an end portion of the bar portion 50 protrudes upward from the opening 45, and contacts the switch lever 63 to move the switch lever 63 upward. Because the gap between the inner periphery of the opening 45 of the intermediate member 42 and the outer periphery of the bar portion 50a is small, the operation bar 50 is prevented from being tilted. Although the ring-shaped projection 49 is provided in the recessed portion 48 of the intermediate member 42 in the embodiment, the ring-shaped projection 49 may be provided on the upper surface of the guard portion 50b, instead of providing the ring-shaped projection 49 in the recessed portion 48.

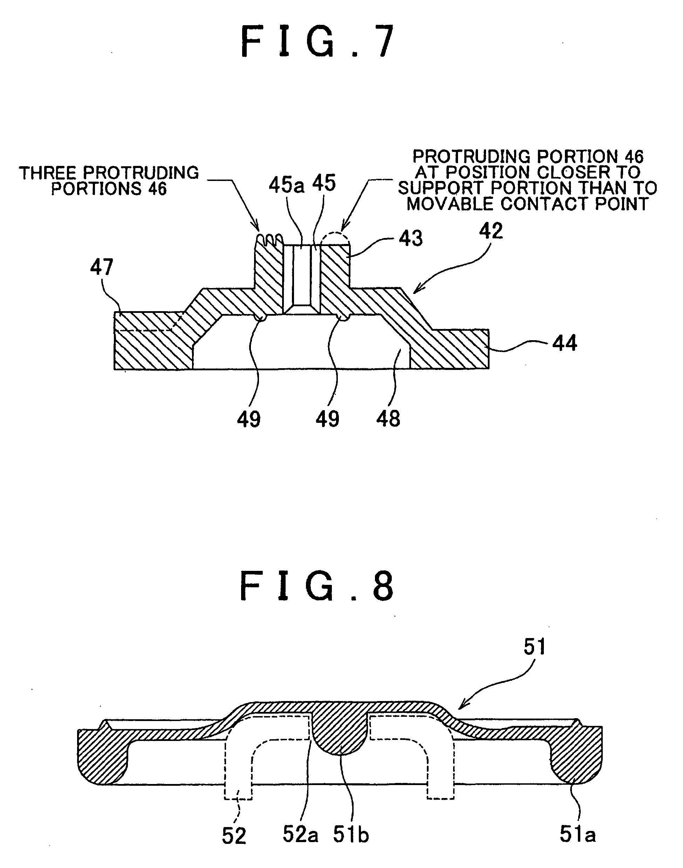

The diaphragm 51 is made of resin, and has a thin plate shape. FIG. 8 is an enlarged sectional view showing the diaphragm 51. As shown in FIG. 8, the diaphragm 51 includes a thick root portion 51a and a protrusion 51b with a columnar shape. The root portion 51a is positioned at an outer peripheral end of the diaphragm 51. The protrusion 51b is positioned at a center of a bottom portion of the diaphragm 51 to protrude downward. The spring receiver 52 has a U-shape in a sectional view, and is made of resin. A circular opening 52a is formed at a center of the spring receiver 52. The protrusion 51b of the diaphragm 51 is fitted in the circular opening 52. The spring receiver 52 is positioned by fitting the protrusion 51b of the diaphragm 51 in the circular opening 52a.

The operation bar 50, the diaphragm 51, the spring receiver 52, the spring 53, and the spring supporter 40 are arranged between the body member 31 and the intermediate member 42 in the stated order in a direction from an upper position toward a lower position.

The case member 55 with a cap shape is made of resin, and positioned in the upper portion of the clogging sensor 30. A first hollow chamber 56 is formed inside the case member 55. A thin cylindrical portion 57 with a circular shape is positioned at a lower end of the case member 55. A pass-through passage 58 is formed at a center of the upper portion of the case member 55. The pass-through passage 58 extends through the upper portion of the case member 55 from an upper position to a lower position. The first hollow chamber 56 communicates with the atmosphere through the pass-through passage 58. A step portion 56a is formed at a lower portion of the first hollow chamber 56 of the case member 55. Thus, a lower area of the first hollow chamber 56 has a diameter larger than that of an upper area of the first hollow chamber 56. An outer peripheral end of the disc portion 44 of the intermediate member 42 is fitted into the step portion 56a. The rectangular groove 56b is formed at an outer peripheral end of the step portion 56a at a position closer to the fixed contact point 64 than to the support portion 59. The positioning member 47 of the intermediate member 42 is fitted into the rectangular groove 56b. The rectangular groove 56b is slightly larger than the positioning member 47.

Two first connecting terminals 60 are formed, by insert molding, on an upper bottom surface of the case member 55 at an outer end portion. The first connecting terminals 60 protrude into the first hollow chamber 56. The first connecting terminals 60 are used to form the support portion 59. A second connecting terminal 61 is formed, by insert molding, on the upper bottom surface of the case member 55 at an outer end portion on the side of the pass-through passage 58 opposite to the side where the first connecting terminals 60 are formed. The other end portions of the first connecting thermals 60 and the second connecting terminal 61 are positioned outside the case member 55.

One end of the switch lever 63 is fixed to the first connecting terminals 60 by crimping, and thus, the support portion 59 is formed in the switch lever 63. The fixed contact point 64 is fixed to the second connecting terminal 61 by crimping. The position of the fixed contact point 64 is higher than the position of the support portion 59. When the movable contact point 65 contacts the fixed contact point 64, the switch lever 63 is tilted in a manner such that the switch lever 63 extends upward toward the fixed contact point 64.

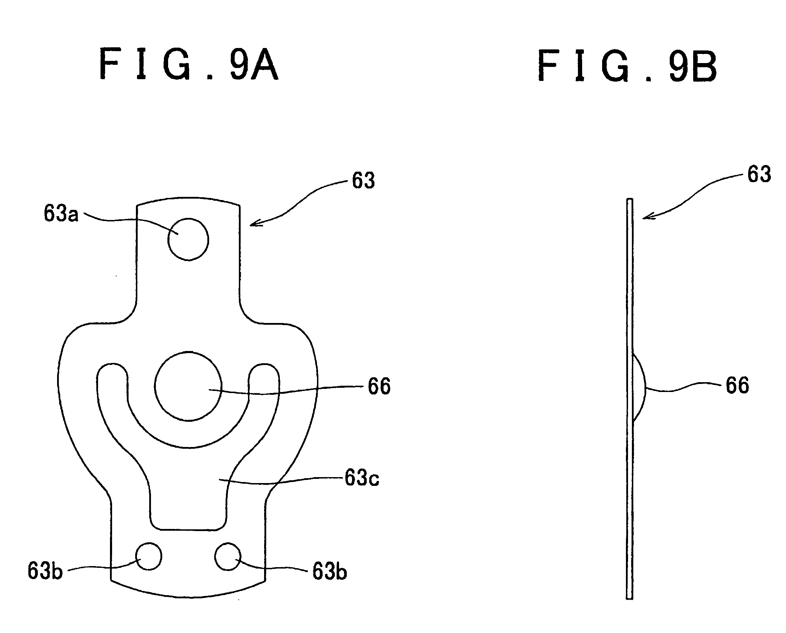

FIG. 9A is a bottom view showing the switch lever 63, and FIG. 9B is a sectional view showing the switch lever 63. The switch lever 63 has a flat plate shape. A center portion of the switch lever 63 expands in a lateral direction. The switch lever 63 is made of metal, and has a spring property. A first opening 63a is formed at one end of the switch lever 63. The movable contact point 65 is fixed at the first opening 63a by crimping. Two second openings 63b are formed at the other end of the switch lever 63. The two first connecting terminals 60 are fixed at the two respective second openings 63b by crimping. A third opening 63c with a heart shape is formed at a center portion of the switch lever 63 to reduce the weight of the switch lever 63. Further, an arc-shaped protrusion 66, which protrudes downward, is provided at the center of the switch lever 63. The switch lever 63, the fixed contact point 64, and the movable contact point 65 constitute the switch assembly.

The movable contact point 65 is fixed at the first opening 63a by crimping. The two first connecting terminals 60 are fixed at the two respective second openings 63b by crimping. Thus, the switch lever 63 is supported by the support portion 59. When no load is applied to the switch lever 63, that is, the switch lever 63 is in a free state, the switch lever 63 is maintained in a substantially horizontal position. When the switch lever 63 is pressed upward by the operation bar 50, the switch lever 63 is deformed, and the movable contact point 65 contacts the fixed contact point 64. Thus, the switch lever 63 is tilted in the manner as shown in FIG. 3. When the operation bar 50 stops pressing the switch lever 63, the switch lever 63 is returned to the original position due to the spring force.

An upper end of the operation bar 50 contacts an arc surface of the arc-shaped protrusion 66 of the switch lever 63. Therefore, although the switch lever 63 is tilted, the switch lever 63 smoothly moves upward and downward. Also, a force applied to the operation bar 50 in the direction of tilt is reduced. The upper end surface of the operation bar 50 may be a flat surface, or more preferably an arc-shaped surface.

The clogging sensor 30 is assembled according to the following method. After the switch assembly, which includes the switch lever 63, the fixed contact point 64, and the movable contact point 65, is fitted to the case member 55, the case member 55 is placed upside down. Then, the intermediate member 42 is placed on the case member 55. In this case, the positioning member 47 of the intermediate member 42 is fitted into the rectangular groove 56b formed in the step portion 56a of the case member 55. As a result, the protruding portion 46, which functions as the stopper of the intermediate member 42, is positioned farther from the support portion 59 than from the fixed contact point 64. That is, the protruding portion 46 is positioned closer to the fixed contact point 64 than to the support portion 59.

Then, the operation bar 50 is placed on the intermediate member 42, and the bar portion 50a is inserted in the opening 45 of the intermediate member 42. Then, the diaphragm 51 is placed on the operation bar 50, and then, the spring receiver 52 is placed on the diaphragm 51 so that the protrusion 51b of the diaphragm 51 is fitted into the circular opening 52a of the spring receiver 52.

Then, the spring 53 is placed on the spring receiver 52, and then, the body member 31, to which the spring supporter 40 is fitted, is placed on the spring 53 to cover the spring 53. After the body member 31 is placed on the spring 53, the thin cylindrical portion 57 provided at the lower end of the case member 55 is fitted into the fitting groove 34 of the body member 31. Then, the body member 31 is welded to the case member 55 at fitting portions, for example, by ultrasonic welding. Thus, the body member 31 is integrated with the case member 55.

After the clogging sensor 30 is assembled, the spring 53 moves the operation bar 50 upward through the spring receiver 52 and the diaphragm 51. As a result, the upper surface of the guard portion 50b of the operation bar 50 contacts the ring-shaped projection 49 provided on the upper surface of the recessed portion 48 of the intermediate member 42. Thus, the upper end of the bar portion 50a protrudes upward from the intermediate member 42, and presses the arc-shaped protrusion 66 of the switch lever 63. Accordingly, a free end of the switch lever 63 moves upward, and the movable contact point 65 at the end of the switch lever 63 contacts the fixed contact point 64. As a result, a circuit is closed (i.e., the circuit is turned on). Thus, the circuit is closed at normal times when the filter is not clogged.

In the clogging sensor 30, the first hollow chamber 56 is formed between the case member 55 and the intermediate member 42. A second hollow chamber 54 is formed between the intermediate member 42 and the diaphragm 51. The negative-pressure chamber 35 is formed between the diaphragm 51 and the body member 31. The first hollow chamber 56 communicates with the atmosphere through the pass-through passage 58. The second hollow chamber 54 communicates with the first hollow chamber 56 through the rectangular grooves 45a formed around the opening 45. The negative-pressure chamber 35 communicates with the upper space 29 of the diesel fuel filter 20.

When the element 25 of the diesel fuel filter 20 is clogged, a large negative pressure is generated in the upper space 29. The negative pressure is transmitted to the negative-pressure chamber 35 through the port 40a and the negative-pressure introduction passage 38. When a negative pressure is applied to the negative-pressure chamber 35, the diaphragm 51 is deformed downward against the force of the spring 53. Then, the operation bar 50 moves downward together with the diaphragm 51 due to the weight of the operation bar 50 and the spring force of the switch lever 63. In this case, because the upper surface of the guard portion 50b of the operation bar 50 is in line contact with the ring-shaped projection 49 of the intermediate member 42, the force required to separate the operation bar 50 from the intermediate member 42 is small, as compared to when the upper surface of the guard portion 50b of the operation bar 50 is in surface contact with the intermediate member 42. Therefore, the operation bar 50 is easily separated from the intermediate member 42. Because the element 25 is clogged at low frequency, and the guard portion 50b of the operation bar 50 contacts the intermediate member 42 for a long period, the guard portion 50b of the operation bar 50 is likely to adhere to the intermediate member 42 at a contact portion as time elapses. Therefore, it is noteworthy that the operation bar 50 is in line contact with the intermediate member 42.

When clogging occurs, and the operation bar 50 moves downward, the switch lever 63 is supported at only one end. If the protruding portion 46 were not provided, the switch lever 63 would greatly vibrate when the state of the switch lever 63 is changed from the state where the spring force of the switch lever 63 is applied to the operation bar 50, to the state where the switch lever 63 is supported at only one end. Accordingly, the switch lever 63 would be deformed, or the movable contact point 65 would strongly hit the fixed contact point 64, and as a result, the contact points would be deformed or broken.

In the embodiment of the invention, however, when clogging occurs, and the operation bar 50 moves downward, the switch lever 63 contacts the protruding portion 46 that functions as the stopper, and the switch lever 63 is supported at two points by the protruding portion 46 and the support portion 59. When the switch lever 63 contacts the protruding portion 46 in the above-described manner, a length from a contact portion of the switch lever 63, which contacts the protruding portion 46, to the movable contact point 65 is shorter than a length from the support portion 59 to the movable contact point 65. That is, the length from the point at which the switch lever 63 is supported to the movable contact point 65 is reduced, as compared to when the switch lever 63 is supported by only the support portion 59. Accordingly, the inertia force is reduced, and as a result, the vibration is reduced.

FIG. 4 shows the state of the clogging sensor 30 when the switch lever 63 contacts the protruding portion 46. When the switch lever 63 contacts the protruding portion 46 as shown in FIG. 4, the switch lever 63 is tilted in a manner such that the position of the movable contact point 65 is higher than the position of the support portion 59, and the spring force is applied to the protruding portion 46. By placing the switch lever 63 in this state, it is possible to reduce the possibility that the switch lever 63 greatly vibrates. When the element 25 is clogged, and the clogging sensor 30 is placed in the state shown in FIG. 4, the circuit is opened (i.e., the circuit is turned off), and the warning light 30a provided in the driver's seat is turned on.

When the element 25 is replaced, and a negative pressure equal to or larger than a predetermined value is no longer applied to the diaphragm 51, the diaphragm 51 is returned to a normal position shown in FIG. 3. Accordingly, the movable contact point 65 contacts the fixed contact point 64, and thus, the clogging sensor 30 is reset. When a negative pressure is no longer applied to the diaphragm 51, the diaphragm 51 is returned to the normal position shown in FIG. 3. If the guard portion 50b were not provided in the operation bar 50, the operation bar 50 would move upward to a higher position due to the inertia force, and would strongly press the switch lever 63, and as a result, for example, the switch lever 63 would be deformed in the worst case. However, in the embodiment, because the guard portion 50b contacts the intermediate member 42, the operation bar 50 is prevented from excessively moving upward.

FIG. 7 shows a modified example of the protruding portion 46. Three protruding portions 46 are provided on the left side in FIG. 7, that is, three protruding portions 46 are provided at positions farther from the support portion 59 than from the movable contact point 65, instead of providing one protruding portion 46 as shown in FIG. 3. In this case, the number of the protruding portions 46 is not limited to a specific number, as long as at least two protruding portions 46 are provided. By providing a plurality of protruding portions 46 in this manner, it is possible to disperse an impact force when the switch lever 63 hits the protruding portion 46.

One protruding portion 46 is provided on the right side in FIG. 7, as shown by the dotted line, that is, one protruding portion 46 is provided at a position closer to the support portion 59 than to the movable contact point 65. In reality, it is preferable that the protruding portion 46 should be provided at a position farther from the support portion 59 than from the movable contact point 65 as shown in FIG. 3. In addition to one protruding portion 46 shown by the dashed line in FIG. 7, one protruding portion 46 may be provided on the left side as shown in FIG. 3, or three protruding portions 46 may be provided on the left side, as shown in FIG. 7.

The invention is not limited to the above-described embodiments. The design may be appropriately modified without deporting from the scope of the invention as defined the claims. For example, although the clogging sensor is used for the diesel fuel filter in the above-described embodiments, the clogging sensor may be used for other filters.

## Claims

1. A clogging sensor that includes a case member (55) in which a switch assembly is housed, an intermediate member (42) in which an operation bar (50) moves, a diaphragm (51) that moves in association with the operation bar (50), and a body member (31) into which a negative pressure is introduced, wherein
the switch assembly includes a fixed contact point (64), a movable contact point (65), and a switch lever (63) with a spring property;
the movable contact point (65) is provided at one end of the switch lever (63), and a support portion (59), which is supported by the case member (55), is formed at the other end of the switch lever (63); and
when a negative pressure equal to or larger than a first predetermined value is applied to the diaphragm (51), the movable contact point (65) moves away from the fixed contact point (64), wherein the switch lever (63) is supported at at least two points by a stopper (42, 46) and the support portion (59) as long as the negative pressure equal to or larger than the first predetermined value is applied,
**characterized in that** the stopper is at least one protruding portion (46) provided on an upper surface of the intermediate member (42) and the at least one protruding portion (46) is provided at a position farther from the support portion (59) than from the movable contact point (65), wherein the intermediate member (42) includes a cylindrical portion (43) with a small diameter and a disc portion (44) with a large diameter, wherein an opening (45) is formed in a center of the cylindrical portion (43) and the operation bar (50) is inserted into the opening (45) and wherein the at least one protruding portion (46) is provided at an upper end surface of the cylindrical portion (43).

2. The clogging sensor according to claim 1, wherein
the switch lever (63) is supported at the at least two points by the stopper and the support portion (59), in a manner such that a spring force of the switch lever (63) is applied to the stopper.

3. The clogging sensor according to claim 2, wherein
the switch lever (63) is supported in a manner such that a position of the movable contact point (65) is higher than a position of the support portion (59).

4. The clogging sensor according to claim 3, wherein
an arc-shaped protrusion (66), which protrudes downward, is provided in the switch lever (63), and the operation bar (50) presses the arc-shaped protrusion (66).

5. The clogging sensor according to any one of claims 1 to 4, wherein
the operation bar (50) includes a guard portion (50b); and
when the movable contact point (65) contacts the fixed contact point (64), the guard portion (50b) contacts the intermediate member (42) so that a contact pressure between the movable contact point (65) and the fixed contact point (64) is equal to or lower than a second predetermined pressure.

6. The clogging sensor according to claim 5, wherein
the intermediate member (42) includes a recessed portion (48); and
the guard portion (50b) is inserted into, and contacts the recessed portion (48).

7. The clogging sensor according to claim 5 or 6, wherein a projection (49) is provided in one of the guard portion (50b) and the intermediate member (42) at a contact portion at which the guard portion (50b) contacts the intermediate member (42).

8. The clogging sensor according to claim 7, wherein when the movable contact point (65) contacts the fixed contact point (64), the projection (49) provided in the one of the guard portion (50b) and the intermediate member (42) makes line contact with the other of the guard portion (50b) and the intermediate member (42).

9. The clogging sensor according to any one of claims 1 to 8, wherein the clogging sensor (30) is used for a diesel fuel filter.

## Patentansprüche

1. Verstopfungssensor, der ein Gehäuseteil (55), in dem eine Schaltbaugruppe untergebracht ist, ein Zwischenteil (42), in dem sich eine Betätigungsstange (50) bewegt, eine Membran (51), die sich zusammen mit der Betätigungsstange (50) bewegt und ein Hüllenteil (31) umfasst, in das ein Unterdruck einführbar ist, wobei
die Schaltbaugruppe einen festen Kontaktpunkt (64), einen beweglichen Kontaktpunkt (65) und einen Schalthebel (63) mit einer federnden Eigenschaft aufweist;
der bewegliche Kontaktpunkt (65) an einem Ende des Schalthebels (63) vorgesehen ist und ein Lagerabschnitt (59), der vom Gehäuseteil (55) gestützt wird, am anderen Ende des Schalthebels (63) gebildet ist; und
wenn ein Unterdruck gleich oder größer als ein vorab festgelegter Wert auf die Membran (51) wirkt, der bewegliche Kontaktpunkt (65) sich vom festen Kontaktpunkt (64) weg bewegt, wobei der Schalthebel (63) an mindestens zwei Punkten durch einen Anschlag (42, 46) und den Lagerabschnitt (59) gelagert ist, so langer der Unterdruck größer oder gleich dem ersten vorab festgelegten Wert wirkt,
**dadurch gekennzeichnet, dass** der Anschlag mindestens ein vorstehender Abschnitt (46) ist, der an einer oberen Oberfläche des Zwischenteils (42) vorgesehen ist und der mindestens eine vorstehende Abschnitt (46) an einer Position weiter weg vom Lagerabschnitt (59) als vom beweglichen Kontaktpunkt (65) vorgesehen ist, wobei das Zwischenteil (42) einen zylindrischen Abschnitt (43) mit einem kleinen Durchmesser und einen Scheibenabschnitt (44) mit einem großen Durchmesser umfasst, wobei eine Öffnung (45) in einer Mitte des zylindrischen Abschnitts (43) gebildet ist und die Betätigungsstange (50) in die Öffnung (45) eingeführt ist, und wobei der mindestens eine vorstehende Abschnitt (46) an einer oberen Endfläche des zylindrischen Abschnitts (43) vorgesehen ist.

2. Verstopfungssensor nach Anspruch 1, wobei
der Schalthebel (63) durch den Anschlag und den Lagerabschnitt (59) an mindestens zwei Punkten in einer Weise so unterstützt wird, dass eine Federkraft des Schalthebels (63) auf den Anschlag wirkt.

3. Verstopfungssensor nach Anspruch 2, wobei
der Schalthebel (63) in einer Weise so gelagert ist, dass eine Position des beweglichen Kontaktpunkts (65) höher als eine Position des Lagerabschnitts (59) ist.

4. Verstopfungssensor nach Anspruch 3, wobei
ein bogenförmiger Vorsprung (66), der nach unten vorsteht, in dem Schalthebel (63) vorgesehen ist und die Betätigungsstange (50) auf den bogenförmigen Vorsprung (66) drückt.

5. Verstopfungssensor nach einem der Ansprüche 1 bis 4, wobei
die Betätigungsstange (50) einen Schutzabschnitt (50b) umfasst; und
wenn der bewegliche Kontaktpunkt (65) den festen Kontaktpunkt (64) berührt, der Schutzabschnitt (50b) das Zwischenteil (42) so berührt, dass ein Kontaktdruck zwischen dem beweglichen Kontaktpunkt (65) und dem festen Kontaktpunkt (64) gleich groß wie oder kleiner als ein zweiter vorab festgelegter Druck ist.

6. Verstopfungssensor nach Anspruch 5, wobei
das Zwischenteil (42) einen zurückgesetzten Abschnitt (48) umfasst; und
der Schutzabschnitt (50b) in den zurückgesetzten Abschnitt (48) eingeführt ist und darin eingreift.

7. Verstopfungssensor nach Anspruch 5 oder 6, wobei ein Vorsprung (49) entweder im Schutzabschnitt (50b) oder im Zwischenteil (42) an einem Kontaktabschnitt vorgesehen ist, an dem der Schutzabschnitt (50b) das Zwischenteil (42) berührt.

8. Verstopfungssensor nach Anspruch 7, wobei der Vorsprung (49), der entweder im Schutzabschnitt (50b) oder im Zwischenteil (42) vorgesehen ist, eine Linienberührung mit dem anderen aus dem Schutzabschnitt (50b) und dem Zwischenteil (42) herstellt, wenn der bewegliche Kontaktpunkt (65) den festen Kontaktpunkt (64) berührt.

9. Verstopfungssensor nach einem der Ansprüche 1 bis 8, wobei der Verstopfungssensor (30) für einen Dieselkraftstofffilter verwendet wird.

## Revendications

1. Capteur de colmatage qui inclut un élément de carter (55) dans lequel un ensemble de commutateur est logé, un élément intermédiaire (42) dans lequel une barre d'actionnement (50) se déplace, un diaphragme (51) qui se déplace en association avec la barre d'actionnement (50), et un élément de corps (31) dans lequel une pression négative est introduite, dans lequel
l'ensemble de commutateur inclut une point de contact fixe (64), un point de contact mobile (65), et un levier de commutateur (63) avec une propriété élastique ;
le point de contact mobile (65) est placé à une extrémité du levier de commutateur (63), et une partie de support (59), qui est supportée par l'élément de carter (55), est formée à l'autre extrémité du levier de commutateur (63) ; et
quand une pression négative supérieure ou égale à une première valeur prédéterminée est appliquée au diaphragme (51), le point de contact mobile (65) s'éloigne du point de contact fixe (64), dans lequel le levier de commutateur (63) est supporté en au moins deux points par un élément d'arrêt (42, 46) et la partie de support (59) aussi longtemps que la pression négative supérieure ou égale à la première valeur prédéterminée est appliquée,
**caractérisé en ce que** l'élément d'arrêt est au moins une partie saillante (46) placée sur une surface supérieure de l'élément intermédiaire (42) et l'au moins une partie saillante (46) est placée en une position plus éloignée de la partie de support (59) que du point de contact mobile (65), dans lequel l'élément intermédiaire (42) inclut une partie cylindrique (43) avec un petit diamètre et une partie de disque (44) avec un grand diamètre, dans lequel une ouverture (45) est formée dans un centre de la partie cylindrique (43) et la barre d'actionnement (50) est insérée dans l'ouverture (45) et dans lequel l'au moins une partie saillante (46) est placée au niveau d'une surface d'extrémité supérieure de la partie cylindrique (43).

2. Capteur de colmatage selon la revendication 1, dans lequel
le levier de commutateur (63) est supporté en les au moins deux points par l'élément d'arrêt et la partie de support (59), de telle manière qu'une force élastique du levier de commutateur (63) est appliquée à l'élément d'arrêt.

3. Capteur de colmatage selon la revendication 2, dans lequel
le levier de commutateur (63) est supporté de telle manière qu'une position du point de contact mobile (65) est plus haute qu'une position de la partie de support (59).

4. Capteur de colmatage selon la revendication 3, dans lequel
une saillie en forme d'arc (66), qui fait saillie vers le bas, est placée dans le levier de commutateur (63), et la barre d'actionnement (50) presse la saillie en forme d'arc (66).

5. Capteur de colmatage selon l'une quelconque des revendications 1 à 4, dans lequel
la barre d'actionnement (50) inclut une partie de retenue (50b) ; et
quand le point de contact mobile (65) entre en contact avec le point de contact fixe (64), la partie de retenue (50b) entre en contact avec l'élément intermédiaire (42) de telle manière qu'une pression de contact entre le point de contact mobile (65) et le point de contact fixe (64) est inférieure ou égale à une seconde pression prédéterminée.

6. Capteur de colmatage selon la revendication 5, dans lequel
l'élément intermédiaire (42) inclut une partie en retrait (48) ; et
la partie de retenue (50b) est insérée dans, et entre en contact avec la partie en retrait (48).

7. Capteur de colmatage selon la revendication 5 ou 6, dans lequel une saillie (49) est placée dans l'un de la partie de retenue (50b) et de l'élément intermédiaire (42) en une partie de contact en laquelle la partie de retenue (50b) entre en contact avec l'élément intermédiaire (42).

8. Capteur de colmatage selon la revendication 7, dans lequel quand le point de contact mobile (65) entre en contact avec le point de contact fixe (64), la saillie (49) placée dans l'un de la partie de retenue (50b) et de l'élément intermédiaire (42) réalise un contact linéaire avec l'autre de la partie de retenue (50b) et de l'élément intermédiaire (42).

9. Capteur de colmatage selon l'une quelconque des revendications 1 à 8, dans lequel le capteur de colmatage (30) est utilisé pour un filtre de carburant diesel.
